# EUROPÄISCHE PATENTSCHRIFT

(11) **EP 3 221 160 B1**
(45) Veröffentlichungstag und Bekanntmachung des Hinweises auf die Patenterteilung: **15.04.2020**
(21) Anmeldenummer: 15745202.0
(22) Anmeldetag: 03.08.2015
(51) Int. Cl.: B60C 11/13, B60C 11/04

(54) **FAHRZEUGLUFTREIFEN**
PNEUMATIC VEHICLE TYRE
PNEUMATIQUE DE VÉHICULE

(30) Priorität: 19.11.2014 DE 102014223599
(43) Veröffentlichungstag der Anmeldung: 27.09.2017
(73) Patentinhaber: Continental Reifen Deutschland GmbH, 30165 Hannover (DE)
(72) Erfinder: GLÄSER, Björn-Birk, Monroe, NC 28112 (US); BEHR, Ulrich, 30167 Hannover (DE); BOSTON, Charles Henry, 30175 Hannover (DE); SCHÜRMANN, Oliver, 30855 Langenhagen (DE); DOMSCHEIT, Andreas, 30459 Hannover (DE)
(74) Vertreter: Finger, Karsten
(86) Internationale Anmeldenummer: PCT/EP2015/067793
(87) Internationale Veröffentlichungsnummer: WO 2016/078783

(56) Entgegenhaltungen:
- EP-A1- 1 698 491
- EP-A1- 2 292 448
- EP-A2- 0 503 534
- DE-A1-102007 016 930
- JP-A- H0 911 708
- US-A- 2 612 928
- US-A- 5 535 798
- Matthias Körnich ET AL: "Reifenprofile - Filme - Sachgeschichten - Die Seite mit der Maus - WDR Fernsehen", Die Seite mit der Maus, 13. Februar 2011 (2011-02-13), XP055231571, Gefunden im Internet: URL:http://www.wdrmaus.de/sachgeschichten/ sachgeschichten/reifenprofile.php5 [gefunden am 2015-11-26]

## Beschreibung

Die Erfindung betrifft einen Fahrzeugluftreifen für Personenkraftwagen oder Vans mit einem zumindest einer in Umfangsrichtung verlaufenden breiten Umfangsrille, welche an der Laufstreifenperipherie von zwei parallel zueinander und geradlinig verlaufenden Randkanten begrenzt ist und einen Rillengrund sowie zwei Rillenflanken aufweist, wobei an den Rillenflanken vorspringende Elemente in Umfangsrichtung abwechselnd an der einen und der anderen Rillenflanke ausgebildet sind, wobei jedem vorspringenden Element ein Rillenflankenabschnitt an der gegenüber befindlichen Rillenflanke gegenüber liegt, welcher zumindest im Wesentlichen in radialer Richtung beginnend bei der Randkante bis zum Rillengrund verläuft, wobei der Rillengrund entlang und zwischen den vorspringenden Elementen mäander-oder wellenförmig verläuft.

Ein derartiger Fahrzeugluftreifen, welcher vorzugsweise ein Nutzfahrzeugreifen ist, ist aus der EP 2 144 767 B1 bekannt. Die an den Rillenflanken angeordneten und von diesen vorspringenden Elemente sind Teile oder Abschnitte von spitzen Körpern, deren Basisflächen dem Rillengrund zugeordnet sind und deren Spitzen der Laufstreifenperipherie benachbart sind. Die vorspringenden Elemente sind Abschnitte von Kegeln oder kegelähnlichen Körpern. Derart ausgeführte vorspringende Elemente stellen Flächen mit einem großen Öffnungswinkel und vielen Flächen zur Verfügung, die ein Eindringen von Fremdkörpern, wie Steinen, verhindern bzw. ein Hinausbefördern von Fremdkörpern unterstützen sollen.

Aus der US 2 612 928 A ist ein Fahrzeugluftreifen mit einem Laufstreifen mit in Draufsicht zickzackförmig verlaufenden, in ihrem Inneren jedoch unstrukturierten Umfangsrillen bekannt. Die zwischen den Umfangsrillen befindlichen Profilrippen sind mit Einschnitten versehen, die gemeinsam mit dem Zickzack der Umfangsrillen in Umfangsrichtung gemäß einer Pitchfolge angeordnet sinds. Das Vorsehen einer Pitchfolge zur Verminderung des Reifenfahrbahngeräusches ist hinlänglich bekannt, beispielsweise auch aus der Sendung mit der Maus (Matthias Körnich ET AL: "Reifenprofile - Filme - Sachgeschichten - Die Seite mit der Maus - WDR Fernsehen", Die Seite mit der Maus, 13. Februar 2011 (2011-02-13), XP055251571, aufgerufen am 30.10.2017).

Aus der EP 0 503 534 A2 ist ein Fahrzeugluftreifen mit einem Laufstreifen mit wellenförmig verlaufenden Umfangsrillen bekannt. Die Wellenamplitude ist am Rillengrund größer als an der Laufstreifenperipherie, wobei die Wellenamplitude an der Laufstreifenperipherie auch Null sein kann. In den Umfangsrillen sind mittig als Steinauswerfer wirkende Elemente ausgebildet, welche durch zwei unter einem Winkel aneinander anschließende, schräge Deckflächen begrenzt sind.

Die EP 2 292 448 A1 offenbart einen Nutzfahrzeugreifen mit Umfangsrillen, welche ein Rillenvolumen von 1% bis 10% des Laufstreifens-Bruttovolumen aufweisen. An den Rillenflanken der Umfangsrillen sind vorspringende, pyramidenartige Elemente ausgebildet. Dieser Nutzfahrzeugreifen soll einen geringen Rollwiderstand aufweisen.

Die JP H09 11708 A offenbart einen Fahrzeugluftreifen mit einem Laufstreifen mit Umfangsrillen, welche durch wellenartig ausgestaltete Rillenwände begrenzt sind. Diese sollen einen ungleichmäßigen Abrieb im Bereich der Umfangsrille ("railway wear") verhindern.

Aus der US 5 535 798 A ist ein Schwerlastreifen mit einem Laufstreifen mit Umfangsrillen bekannt. Die Umfangsrillen sind an der Laufstreifenperipherie von zwei parallel zueinander und geradlinig verlaufenden Randkanten begrenzt. An den Rillenflankender Umfangsrillen sind pyramidenartige Vorsprünge ausgebildet, sodass der Rillengrund in Draufsicht zickzack-förmig verläuft. Auch diese Maßnahme soll "railway wear" verhindern.

Die EP 1 698 491 A1 offenbart einen weiteren Schwerlastreifen. Der Laufstreifen ist mit drei Umfangsrillen versehen. In der mittleren Umfangsrille ist mittig ein umlaufender Gummisteg ausgebildet, welcher einen gleichmäßigen Abrieb des Laufstreifens ermöglichen soll. Die beiden schulterseitigen Umfangsrillen setzen sich aus einer Vielzahl kurzer Umfangsabschnitte zusammen, in welchen die Neigung der beiden Rillenwände variiert.

Bei Fahrzeugluftreifen für Personenkraftwagen oder Vans ist es bislang unüblich, an den Rillenflanken von Umfangsrillen vorspringende Elemente auszubilden. Die in solchen Reifen meist vorgesehenen, in Umfangsrichtung gerade umlaufenden Rillen haben vor allem den Zweck, eine gute Wasserabführung sicherzustellen. Es wird daher darauf geachtet, dass die Umfangsrillen eine möglichst ungehinderte Durchströmung von Wasser ermöglichen. Derart ausgeführte Umfangsrillen erzeugen allerdings Geräusche beim Abrollen des Reifens, beispielsweise bilden sie beim Ablaufen des Reifens am Untergrund eine Art Rohr mit offenem Ein- und Auslauf. Durch die Rotation des Reifens kann in dem Rohr eine stehende Welle entstehen, die durch den sogenannten "Horn"-Effekt verstärkt wird und sich in der Luft ausbreitet. Dies bedingt für das menschliche Ohr unangenehme Geräusche in dem besonders sensiblen 1000 Hz-Bereich. Je größer der Querschnitt der Umfangsrillen ist, desto besser sind die Eigenschaften des Fahrzeugluftreifens auf nassem Untergrund, je kleiner der Rillenquerschnitt, desto geringer ist jedoch die Entstehung und Ausbreitung von Schallwellen in den Umfangsrillen. Umfangsrillen im Laufstreifen verursachen ferner eine über den Laufstreifenquerschnitt ungleichmäßige Steifigkeitsverteilung und Materialverteilung im Laufstreifen. Dies kann zur Ausbildung einer gewissen Welligkeit im Gürtel und in der Karkasse führen. Die genannten Effekte können den Rollwiderstand negativ beeinflussen und zur Anregung von Schwingungen im Gürtel und der Karkasse beim Abrollen führen, was wiederum die akustische Abstrahlung des Reifens, das hörbare Geräusch, erhöht.

Aus der EP 2 406 088 B1 ist es bekannt, zur Reduktion der oben erwähnten Geräuscheffekte am Rillengrund der Umfangsrillen in Richtung der Erstreckung der Umfangsrillen in bestimmten Abständen Erhebungen auszubilden, insbesondere werden diese Erhebungen paarweise und unter relativ großen Abständen in den Umfangsrillen vorgesehen. Der geräuschmindernde Effekt dieser bekannten Ausführung ist nicht zufriedenstellend.

Der Erfindung liegt somit die Aufgabe zugrunde, bei einem Reifen der eingangs genannten Art die an den Rillenflanken vorspringenden Elemente derart auszuführen, dass vorrangig die Entstehung und Ausbreitung von Schallwellen, insbesondere das Ausbilden der oben erwähnten Effekte, vermindert bzw. verhindert wird, wobei jedoch gleichzeitig eine gute Abführung von Wasser gewährleistet sein soll.

Gelöst wird die gestellte Aufgabe erfindungsgemäß dadurch, dass die vorspringenden Elemente im Wesentlichen keilartig ausgeführt sind und in radialer Richtung jeweils von einer einzigen Schrägfläche begrenzt sind, die sich in axialer Richtung bis zum Rillengrund erstreckt und in Umfangsrichtung zumindest im Wesentlichen über die Umfangserstreckung der Elemente verläuft, wobei die vorspringenden Elemente in zumindest zwei unterschiedlichen Umfangslängen vorgesehen sind und über den Umfang der Umfangsrille gemäß einer bestimmten Abfolge aufeinander folgen und wobei sich der Rillengrund aus gerade in Umfangsrichtung verlaufenden, in Umfangsrichtung abwechselnd in axialer Richtung gegeneinander versetzten Rillengrundabschnitten, Verbindungsabschnitten und zwischen den Rillengrundabschnitten und den Verbindungsabschnitten verlaufenden gerundeten Eckabschnitten zusammensetzt.

Durch die Ausführung der vorspringenden Elemente als im Wesentlichen keilartig geformte Körper, die in Umfangsrichtung abwechselnd an der einen und der anderen Rillenflanke angeordnet sind, bilden diese Elemente Hindernisse, welche die Entstehung und Ausbreitung von Schallwellen behindern bzw. verhindern. Die unterschiedlichen Umfangslängen wirken zusätzlich dem Entstehen von Resonanzen entgegen und tragen daher ebenfalls zu einer Reduktion hörbarer Schallwellen bei. Die Schrägflächen dominieren die vorspringenden Elemente, sodass diese den Rillenquerschnitt nur wenig verringern. Eine gute Nässeperformance bzw. ein gutes Wasserableitvermögen der Umfangsrillen bleiben somit erhalten. Vorteilhafterweise bewirken derart ausgeführte Umfangsrillen auch eine Vergleichmäßigung der Steifigkeit der Profilstrukturen bzw. der Materialverteilung über den Querschnitt des Reifens. Auch diese Maßnahme ist für die Geräuschabstrahlung, ferner auch für die Tire Uniformity und den Abrieb, von Vorteil. Für ein gutes Wasserableitvermögen der Umfangsrillen ist es dabei vorteilhaft, wenn gemäß der Erfindung die Schrägflächen unter einem Winkel von 30° bis 60° zur radialen Richtung verlaufen.

Bei einer bevorzugten Ausführungsform sind vorspringende Elemente vorgesehen, deren Schrägflächen im Querschnitt geradlinig verlaufen, sodass die Schrägflächen ebene Flächen sind. Bei ebenen Schrägflächen ist es vorteilhaft, ihren Neigungswinkel zur radialen Richtung eher größer zu wählen. Bei einer weiteren, alternativen Ausführungsform der Erfindung sind vorspringende Elemente vorgesehen, deren Schrägflächen im Querschnitt konvex oder konkav gekrümmt sind. Auch bei dieser Ausführungsform ist es vorteilhaft, die Neigung der Schrägflächen relativ zur radialen Richtung derart zu wählen, dass die Rillenquerschnittsfläche möglichst groß bleibt.

Weitere erfindungsgemäße Maßnahmen tragen dazu bei, die Entstehung und Ausbreitung von Schallwellen in den Umfangsrillen zu behindern bzw. sogar zu verhindern. In diesem Zusammenhang ist es von Vorteil, wenn die Verbindungsabschnitte entweder zumindest im Wesentlichen in axialer Richtung oder gegenüber der axialen Richtung unter einem Winkel verlaufen können. Dabei können sämtliche Verbindungsabschnitte entweder gleichsinnig oder abwechselnd gegensinnig zur axialen Richtung geneigt verlaufen. Die gerundeten Eckabschnitte können über Winkelbereiche von 30° bis 150°, insbesondere 45° bis 135°, verlaufen.

Bei einer bevorzugten Ausführungsform der Erfindung sind Schrägflachen vorgesehen, die an den Randkanten beginnen. Bei weiteren Varianten der Erfindung können Schrägflachen vorgesehen sein, die in einem radialen Abstand von insbesondere 0,5 mm bis zu 3 mm von den Randkanten beginnen, sodass die Rillenquerschnittsfläche je nach der gewählten Neigung der Schrägflächen entsprechend beeinflusst werden kann. Um das Entstehen von Resonanzeffekten in den Umfangsrillen möglichst gering zu halten, ist es ferner von Vorteil, wenn die vorspringenden Elemente in bis zu fünf unterschiedlichen Umfangslängen vorgesehen sind, wobei die größte Umfangslänge vorzugsweise um bis zu 65 % länger ist als die kleinste Umfangslänge.

Bei einer bevorzugten Ausgestaltung des Laufstreifenprofils beträgt die kleinste Umfangslänge 6 mm bis 16 mm, bei einer anderen erfindungsgemäßen Ausführung beträgt die kleinste Umfangslänge 18 mm bis 30 mm.

Bei einer weiteren bevorzugten Ausführungsform der Erfindung, die sich ebenfalls auf die Schallabstrahlung beim Abrollen des Reifens günstig auswirkt, entsprechen die Anzahl und Größe der unterschiedlichen Umfangslängen der vorspringenden Elemente sowie deren Abfolge jener bzw. jenen der Pitchfolge der Profilpositive im Laufstreifen.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 und Fig. 2 jeweils eine Draufsicht auf einen Umfangsabschnitt eines Laufstreifens eines Fahrzeugluftreifens mit unterschiedlichen Ausführungsvarianten der Erfindung,
Fig. 3 ein Detail der Fig. 1 in vergrößerter Darstellung,
Fig. 3a einen Schnitt entlang der Linie IIIa-IIIa der Fig. 3,
Fig. 3b einen Schnitt entlang der Linie IIIb-IIIb der Fig. 3,
Fig. 4 ein weiteres Detail der Fig. 1 in vergrößerter Darstellung,
Fig. 4a einen Schnitt entlang der Linie IVa-IVa der Fig. 4,
Fig. 4b einen Schnitt entlang der Linie IVb-IVb der Fig. 4,
Fig. 5 ein Detail der Fig. 2 in vergrößerter Darstellung,
Fig. 5a einen Schnitt entlang der Linie Va-Va der Fig. 5,
Fig. 5b einen Schnitt entlang der Linie Vb-Vb der Fig. 5 und
Fig. 6 eine perspektivische Ansicht eines Details der Fig. 1.

Die Erfindung befasst sich mit der speziellen Ausgestaltung von Umfangsrillen im Laufstreifen eines Fahrzeugluftreifens für Personenkraftwagen oder Vans zur Reduzierung des Reifen-/Fahrbahngeräusches, insbesondere jenes Anteiles, welcher beim Abrollen des Reifens durch die bzw. in den Umfangsrillen entsteht. Die Entstehung und Ausbreitung von Schallwellen in Umfangsrillen ist insbesondere auf den sogenannten "Horn"-Effekt zurückzuführen, hierbei handelt es sich um eine Verstärkung des abgestrahlten Schalls durch das Ausbilden eines Schalltrichters zwischen der gekrümmten Reifenlauffläche und der Fahrbahn am Reifenein- und Reifenauslauf. Darüber hinaus bilden Umfangsrillen mit der Fahrbahnoberfläche beim Abrollvorgang Röhrenresonatoren, wobei durch Strömungsvorgänge und periodische Wechselwirkungen dieser Resonatoren Geräuschanteile im Reifen-/Fahrbahngeräusch entstehen können.

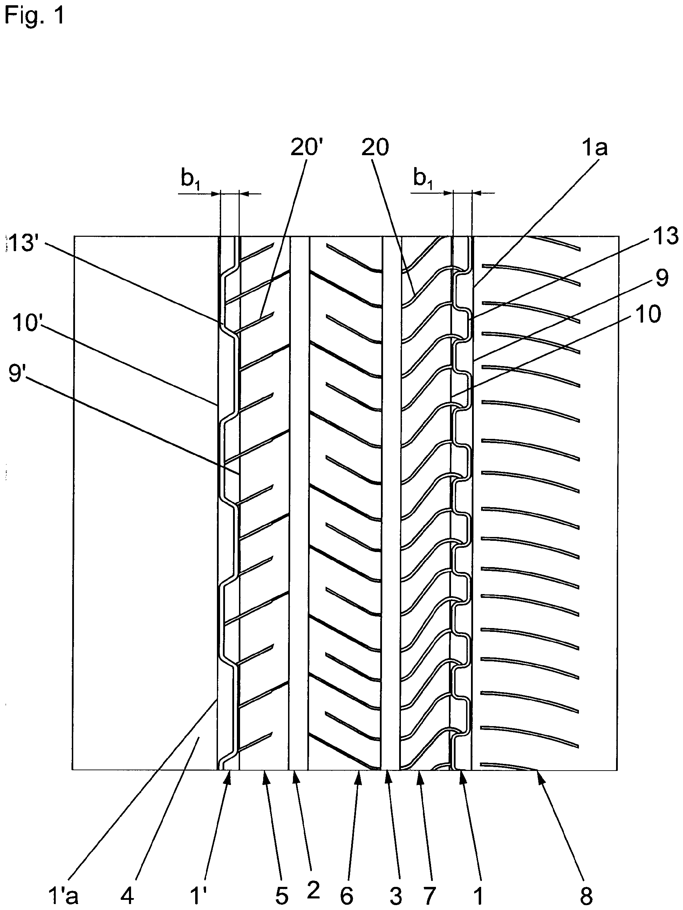

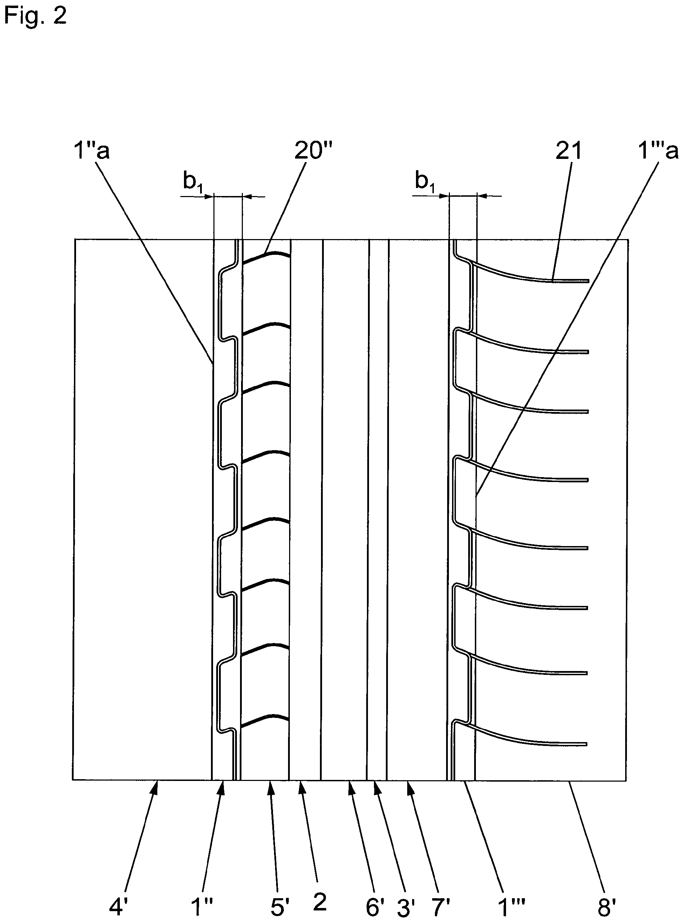

Fig. 1 und 2 zeigen beispielhaft und schematisch jeweils eine Draufsicht auf einen Umfangsabschnitt eines Laufstreifens mit vier breiten Umfangsrillen 1, 1', 2, 3 (Fig. 1) und 1", 1''', 2', 3' (Fig. 2), welche Profilbänder 4, 5, 6, 7, 8 bzw. 4', 5', 6', 7', 8' voneinander trennen bzw. begrenzen, die weitgehend unstrukturiert dargestellt sind. Im Folgenden wird auf die schulterseitig verlaufenden Umfangsrillen 1, 1', 1", 1''', die bei den gezeigten Ausführungsformen erfindungsgemäß gestaltet sind, näher eingegangen. Im Neuzustand des Reifens betrachtet weisen die Umfangsrillen 1, 1', 1", 1''' jeweils zwei an der Laufstreifenperipherie geradlinig und parallel zueinander verlaufende Randkanten 1a, 1'a, 1"a und 1'''a auf. Dargestellt sind ferner Querrillen 20, 20' (Fig. 1) und Querrillen 20" (Fig. 2) sowie Einschnitte 21 (Fig. 2), auf welche weiter unten noch Bezug genommen wird. Weitere, nicht dargestellte Einschnitte und Rillen können vorgesehen sein, dabei können die Profilbänder auch in Profilblöcke gegliedert sein. Die maximale Tiefe der Umfangsrillen 1, 1', 1", 1''' entspricht der vorgesehenen Profiltiefe, welche bei PKW-Reifen üblicherweise zwischen 6,0 mm und 8,5 mm beträgt, ihre Breite b₁ an der Laufstreifenperipherie, welche dem gegenseitigen Abstand der jeweiligen Randkanten 1a, 1'a, 1"a, 1'''a entspricht, beträgt vorzugsweise 8 mm bis 10 mm.

Bei den in Fig. 1 gezeigten Ausführungsformen sind die beiden schulterseitig verlaufenden Umfangsrillen 1,1' gemäß der Erfindung mit besonders strukturierten Rillenflanken 9, 10 bzw. 9', 10' sowie mit einem auf besondere Weise verlaufenden Rillengrund 13, 13' versehen. Wie gezeigt ist es möglich, bei ein und demselben Laufstreifen Umfangsrillen 1, 1' vorzusehen, es ist jedoch auch möglich, bei einem Laufstreifen beispielsweise zwei Umfangsrillen in der gleichen Ausführungsform vorzusehen. Wie in Fig. 1 und Fig. 2 gezeigt ist, ist es ferner für eine Reduktion des Reifen-/Fahrbahngeräusches besonders vorteilhaft, wenn vor allem die schulterseitig verlaufenden Umfangsrillen 1, 1', 1", 1''' erfindungsgemäß gestaltet sind. Die im mittleren Bereich des Laufstreifens verlaufenden Umfangsrillen 2, 3, 2', 3' können in herkömmlicher Weise mit einem breiten Rillengrund und mit in radialer Richtung und im Querschnitt geradlinig verlaufenden Rillenflanken versehen sein.

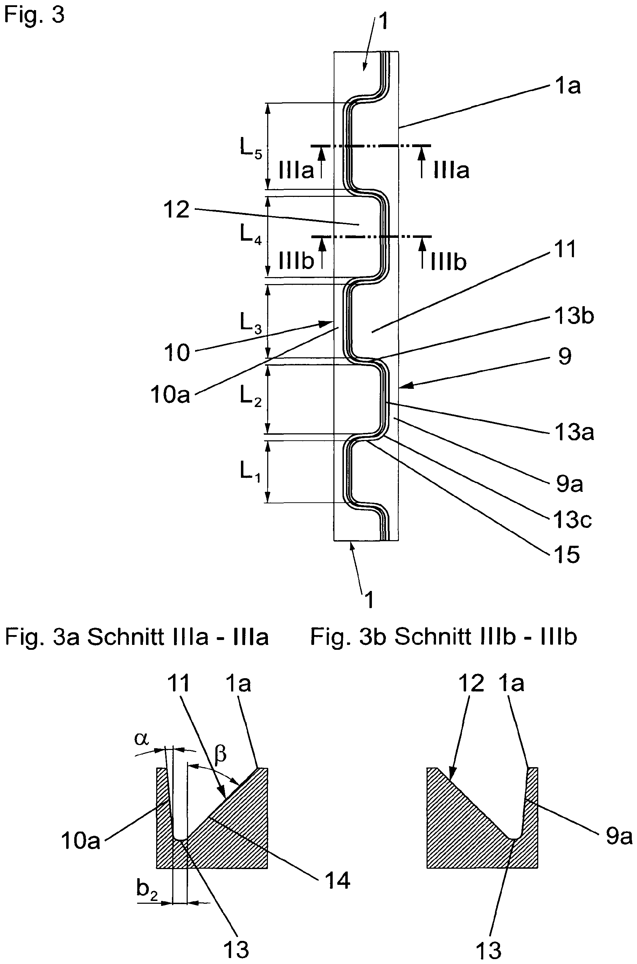

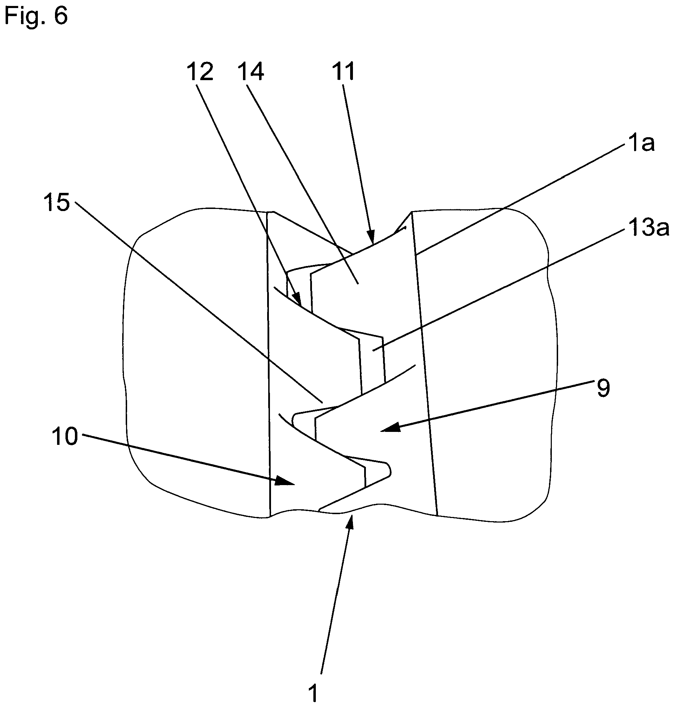

Wie insbesondere Fig. 3, 3a, 3b sowie Fig. 6 zeigen, sind an den einander gegenüberliegenden Rillenflanken 9, 10 der Umfangsrille 1 vorspringende Elemente 11, 12 angeordnet, derart, dass, in Umfangsrichtung betrachtet, jeweils ein an der einen Rillenflanke 9 vorgesehenes vorspringendes Element 11 mit einem an der anderen Rillenflanke 10 vorgesehenen vorspringenden Element 12 abwechselt. Einem Element 11 an der Rillenflanke 9 liegt ein Rillenflankenabschnitt 10a an der anderen Rillenflanke 10, einem Element 12 an der Rillenflanke 10 ein Rillenflankenabschnitt 9a an der anderen Rillenflanke 9 gegenüber. Die Rillenflankenabschnitte 9a, 10a verlaufen im Wesentlichen in radialer Richtung und im Querschnitt geradlinig, bei der gezeigten Ausführungsform schließen die Rillenflankenabschnitte 9a, 10a einen kleinen spitzen Winkel α von bis zu 10° mit der radialen Richtung ein. Die Rillenflankenabschnitte 9a und 10a weisen eine Umfangserstreckung auf, die mit der Umfangserstreckung der Elemente 11, 12 korreliert. Die Rillenflankenabschnitte 9a, 10a schließen unmittelbar an den Rillengrund 13 an, welcher im Querschnitt im Wesentlichen gerundet ausgeführt ist und inklusive der Rundungen eine Breite b₂ von bis zu etwa 1,5 mm besitzt. Der Rillengrund 13 setzt sich demnach in Draufsicht aus entlang der Rillenflankenabschnitte 9a, 10a gerade verlaufenden Rillengrundabschnitten 13a, die in Umfangsrichtung orientiert sind und abwechselnd in axialer Richtung gegeneinander versetzt sind, und aus Verbindungsabschnitten 13b zusammen, welche die in Umfangsrichtung verlaufenden Rillengrundabschnitte 13a über gerundete 90°-Eckabschnitte 13c miteinander verbinden. Die Verbindungsabschnitte 13b verlaufen im Wesentlichen in axialer Richtung und gehen über die 90°-Eckabschnitte 13c in die Rillengrundabschnitte 13a über.

Bei der gezeigten Ausführungsform sind die vorspringenden Elemente 11, 12 im Wesentlichen keilartig geformte Körper, jeweils mit einer von der jeweiligen Randkante 1a unmittelbar bis zum Rillengrund 13 verlaufenden Schrägfläche 14 und im Wesentlichen dreieckförmigen Seitenflächen 15, wobei die Übergänge zwischen den Schrägflächen 14 und den zugehörigen Seitenflächen 15 korrespondierend zum Verlauf des Rillengrundes 13 gerundet sind. Die Schrägflächen 14 sind in Draufsicht ebene und im Wesentlichen rechteckige Flächen, die eine Umfangserstreckung aufweisen, die der Umfangserstreckung der Rillenflankenabschnitte 9a, 10a und der Rillengrundabschnitte 13a im Wesentlichen entspricht. Mit der radialen Richtung schließen die Schrägflächen 14 einen Winkel β ein, welcher zwischen 30° und 60° gewählt wird und insbesondere in der Größenordnung von 45° beträgt.

Gemäß einer bevorzugten Ausführungsform der Erfindung variiert die Umfangserstreckung der vorspringenden Elemente 11, 12 und damit auch die Umfangserstreckung der am Fuß der Elemente 11, 12 verlaufenden Rillengrundabschnitte 13a, insbesondere derart, dass diese mit mindestens zwei unterschiedlichen Umfangslängen vorgesehen werden. Bei der gezeigten Ausführungsform weisen die Elemente 11, 12 fünf unterschiedliche, schrittweise größer werdende Umfangslängen L₁ bis L₅ auf, die, analog zu den bekannten Verfahren der Pitchlängenvariation von Profilpositiven im Laufstreifen, in einer bestimmten Abfolge in Umfangsrichtung aufeinander folgen. Die Längenvariation erfolgt insbesondere derart, dass die größte Umfangslänge L₅ um bis zu 65 % größer ist als die kleinste Umfangslänge L₁. Bei der gezeigten Ausführungsform beträgt beispielsweise die kleinste Umfangslänge L₁ in der Größenordnung von 6 mm bis 16 mm.

Abweichend von der dargestellten Ausführungsform können die Schrägflächen 14 sämtlich im Querschnitt auch leicht konvex oder leicht konkav gekrümmt verlaufen. Möglich ist auch eine Ausführung, bei der die einen Elemente 11 konvex und die anderen Elemente 12 konkav gekrümmte Schrägflächen aufweisen, oder es sind auch Kombinationen von im Querschnitt gerade verlaufenden Schrägflächen mit konvex oder konkav gekrümmten Schrägflächen möglich. Bei konvex oder konkav gekrümmten Schrägflächen ist ihr Neigungswinkel β der Winkel einer die Randkante mit dem Ende der Schrägfläche beim Rillengrund verbindenden Geraden zur radialen Richtung.

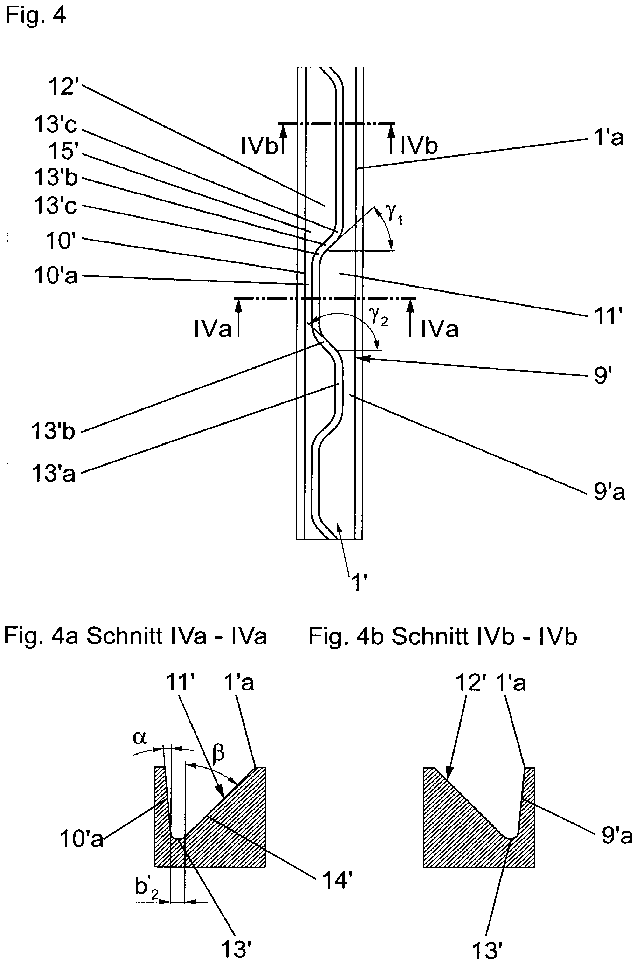

Bei der zweiten, die Umfangsrille 1' betreffenden und insbesondere in Fig. 4, 4a und 4b dargestellten Ausführungsvariante der Erfindung wechseln einander analog zur Umfangsrille 1 in Umfangsrichtung ebenfalls vorspringende Elemente 11' und 12', die an den beiden Rillenflanken 9', 10' ausgebildet sind, ab. Den Elementen 11', 12' gegenüber befindet sich jeweils ein Rillenflankenabschnitt 9'a, 10'a und dazwischen jeweils ein Rillengrundabschnitt 13'a. Die Elemente 11', 12' sind ebenfalls im Wesentlichen keilförmig mit bei der gezeigten Ausführungsform im Querschnitt gerade verlaufenden und daher eben ausgeführten Schrägflächen 14'. Auch bei dieser Ausführungsform weist der Rillengrund 13', welcher eine Breite b₂' von etwa 1,5 mm aufweist, zwischen den Rillengrundabschnitten 13'a verlaufende Verbindungsabschnitte 13'b und gerundete Eckabschnitte 13'c auf. Die Verbindungsabschnitte 13'b verlaufen in Draufsicht zur axialen Richtung jeweils unter einem Winkel γ₁, γ₂ unter abwechselnd gegensinniger Neigung, wobei der Winkel γ₁ in der Größenordnung von 30° bis 90°, insbesondere bis 60°, und γ₂ 120° bis 180°, insbesondere 150°, beträgt. Die Eckabschnitte 13'c "umlaufen" daher jeweils den zum Winkel γ₁, γ₂ komplementären Winkel. Mit dem Verlauf der Verbindungsabschnitte 13'b korrelieren der Verlauf und die Anordnung der Seitenflächen 15' der Elemente 11', 12'. Auch bei dieser Ausführungsform sind die vorspringenden Elemente 11', 12' in unterschiedlich großen Umfangslängen, hier beispielhaft ebenfalls in fünf unterschiedlichen, schrittweise größer werdenden Umfangslängen L₁' bis L₅' ausgeführt, wobei die größte Umfangslänge L₅' um bis zu 65 % größer ist als die kleinste Umfangslänge L₁'. Beim gezeigten Ausführungsbeispiel beträgt die kleinste Umfangslänge L₁' in der Größenordnung von 18 mm bis 30 mm.

Bei dieser Ausführungsform können die Elemente 11', 12' mit Schrägflächen 14' versehen sein, die im Querschnitt eine leicht konvexe oder konkave Krümmung aufweisen.

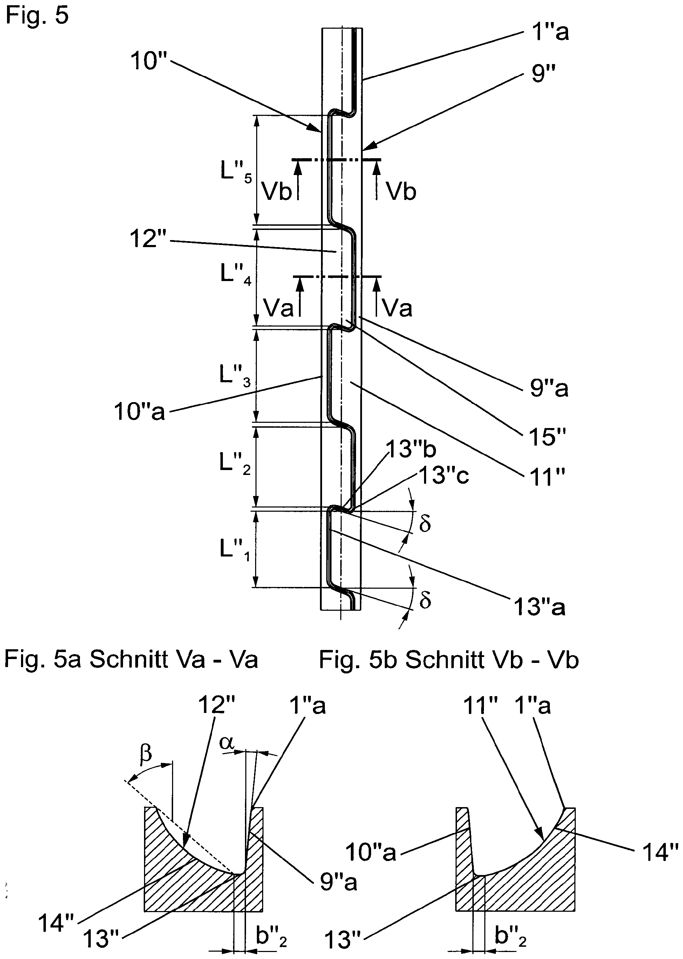

Fig. 5, 5a und 5b verdeutlichen die in den Umfangsrillen 1" und 1'" der Fig. 2 dargestellte Ausführungsform der Erfindung. Auch bei dieser Ausführungsform wechseln einander analog zu den bereits beschriebenen Ausführungsformen in Umfangsrichtung vorspringende Elemente 11" und 12", die an den Rillenflanken 9" und 10" ausgebildet sind, ab. Rillenflankenabschnitte 9"a und 10"a befinden sich gegenüber den Elementen 11" und 12", zwischen den Elementen 11", 12" und den Rillenflankenabschnitten 9"a und 10"a verläuft je ein Rillengrundabschnitt 13"a. Die hier ebenfalls keilförmig gestalteten Elemente 11", 12" weisen im Querschnitt leicht konkav gekrümmte Schrägflächen 14" auf, wobei der Krümmungsradius in der Größenordnung von 10 mm beträgt. Analog zu den bereits beschriebenen Ausführungsformen weist der Rillengrund 13" eine Breite b₂" von etwa 1,5 mm, zwischen den in axialer Richtung gegeneinander versetzten Rillengrundabschnitten 13"a verlaufen Verbindungsabschnitte 13"b und gerundete Eckabschnitte 13"c. Die Verbindungsabschnitte 13"b verlaufen, in Draufsicht betrachtet, zumindest im Wesentlichen parallel zueinander, jedoch zur axialen Richtung unter Winkeln δ in der Größenordnung von bis zu 45°, insbesondere von 10° bis 45°, wobei durch die gleichsinnige Neigung der Verbindungsabschnitte 13"b zur axialen Richtung die Eckabschnitte 13"c in Umfangsrichtung abwechselnd entlang eines spitzen Winkels und eines stumpfen Winkels verlaufen. Wie bereits bei den vorhergehenden Ausführungsbeispielen ist auch bei diesem Ausführungsbeispiel vorgesehen, dass die vorspringenden Elemente 11", 12" in unterschiedlich großen Umfangslängen, auch hier beispielhaft in fünf unterschiedlichen, schrittweise größer werdenden Umfangslängen L₁" bis L₅" ausgeführt sind, die größte Umfangslänge L₅" ist bis zu 65 % größer als die kleinste Umfangslänge L₁". Die kleinste Umfangslänge L₁" kann beispielsweise in der Größenordnung von 20 mm bis 24 mm betragen.

Bei den dargestellten Ausführungsformen der Erfindung sind Schrägflachen 14, 14', 14" vorgesehen, die an den Randkanten 1a, 1'a, 1"a, 1'''a beginnen. Bei weiteren nicht gezeigten Varianten der Erfindung können Schrägflachen 14, 14', 14" vorgesehen sein, die in einem radialen Abstand von insbesondere 0,5 mm bis zu 3 mm von den Randkanten 1a, 1'a, 1"a, 1'''a beginnen. In diesem Fall sind zwischen den vorspringenden Elementen und den Randkanten schmale Rillenflankenabschnitte vorhanden.

Bei sämtlichen Ausführungsvarianten können die mit unterschiedlichen Umfangslängen ausgeführten Elemente 11, 12, 11', 12' derart ausgeführt sein, dass die Anzahl und Abfolge ihrer Umfangslängen an die Pitchfolge der Laufstreifenprofilierung gekoppelt ist, wie in Fig. 1 und Fig. 2 gezeigt, wo die Querrillen 20, 20', 20" sowie die Einschnitte 21 gemäß den Pitchfolgen der Laufstreifenprofilierungen angeordnet sind. Die Anordnung kann jedoch auch derart sein, dass die Vorsprünge 11, 12 bzw. 11', 12' jeweils gemäß einer eigenen Abfolge über den Reifenumfang in den Umfangsrillen angeordnet sind. Merkmale der einzelnen Ausführungsvarianten können ferner miteinander beliebig kombiniert werden.

### Bezugsziffernliste

- 1, 1', 2, 3: Umfangsrille
- 1", 1''',2', 3': Umfangsrille
- la, 1'a, 1"a, 1'''a: Randkante
- 4, 5, 6, 7, 8: Profilband
- 4', 5', 6', 7', 8': Profilband
- 9, 9': Rillenflanke
- 10, 10': Rillenflanke
- 9a, 9'a, 9"a: Rillenflankenabschnitt
- 10a, 10'a, 10"a: Rillenflankenabschnitt
- 11, 11', 11": vorspringendes Element
- 12, 12', 12": vorspringendes Element
- 13, 13', 13": Rillengrund
- 13a, 13'a, 13"a: Rillengrundabschnitt
- 13b, 13'b, 13"b: Verbindungsabschnitt
- 13c, 13'c, 13"c: Eckabschnitt
- 14, 14', 14": Schrägfläche
- 15, 15', 15": Seitenfläche
- b₁: Breite
- b₂, b₂', b₂": Breite
- L₁ bis L₅: Umfangslänge
- L₁' bis L₅': Umfangslänge
- L₁" bis L₅": Umfangslänge
- α, β, γ₁, γ₂, δ: Winkel

## Patentansprüche

1. Fahrzeugluftreifen für Personenkraftwagen oder Vans mit zumindest einer in Umfangsrichtung verlaufenden breiten Umfangsrille (1, 1', 1", 1'''), welche an der Laufstreifenperipherie von zwei parallel zueinander und geradlinig verlaufenden Randkanten (1a, 1'a, 1"a, 1'''a) begrenzt ist und einen Rillengrund (13, 13', 13") sowie zwei Rillenflanken (9, 10, 9', 10', 9", 10") aufweist, wobei an den Rillenflanken (9, 10, 9', 10', 9", 10") vorspringende Elemente (11, 12, 11', 12', 11", 12") in Umfangsrichtung abwechselnd an der einen und der anderen Rillenflanke (9, 10, 9', 10', 9", 10") ausgebildet sind, wobei jedem vorspringenden Element (11, 12, 11', 12', 11", 12") ein Rillenflankenabschnitt (9a, 10a, 9'a, 10'a, 9"a, 10"a) an der gegenüber befindlichen Rillenflanke (9, 10, 9', 10', 9", 10") gegenüber liegt, welcher zumindest im Wesentlichen in radialer Richtung und beginnend bei der Randkante (1a, 1'a, 1"a, 1"'a) bis zum Rillengrund (13, 13', 13") verläuft, wobei der Rillengrund (13, 13', 13") entlang und zwischen den vorspringenden Elementen (11, 12, 11', 12', 11", 12") mäander- oder wellenförmig verläuft,
**dadurch gekennzeichnet,**
**dass** die vorspringenden Elemente (11, 12, 11', 12', 11", 12") im Wesentlichen keilartig ausgeführt sind und in radialer Richtung jeweils von einer einzigen Schrägfläche (14, 14', 14") begrenzt sind, die sich in axialer Richtung bis zum Rillengrund (13, 13', 13") erstreckt und in Umfangsrichtung zumindest im Wesentlichen über die Umfangserstreckung der Elemente (11, 12, 11', 12', 11", 12") verläuft, wobei die vorspringenden Elemente (11, 12; 11', 12', 11", 12") in zumindest zwei unterschiedlichen Umfangslängen (L₁ bis L₅, L₁' bis L₅'; L₁" bis L₅") vorgesehen sind und über den Umfang der Umfangsrille (1, 1', 1", 1"') gemäß einer bestimmten Abfolge aufeinander folgen und wobei sich der Rillengrund (13, 13', 13") aus gerade in Umfangsrichtung verlaufenden, in Umfangsrichtung abwechselnd in axialer Richtung gegeneinander versetzten Rillengrundabschnitten (13a, 13'a, 13"a), Verbindungsabschnitten (13b, 13'b, 13"b) und zwischen den Rillengrundabschnitten (13a, 13'a, 13"a) und den Verbindungsabschnitten (13b, 13'b, 13"b) verlaufenden gerundeten Eckabschnitten (13c, 13'c, 13"c) zusammensetzt.

2. Fahrzeugluftreifen nach Anspruch 1, **dadurch gekennzeichnet, dass** die Schrägflächen (14, 14', 14") unter einem Winkel (β) von 30° bis 60° zur radialen Richtung verlaufen.

3. Fahrzeugluftreifen nach Anspruch 1 oder 2, **dadurch gekennzeichnet, dass** vorspringende Elemente (11, 12) vorgesehen sind, deren Schrägflächen (14) im Querschnitt geradlinig verlaufen, sodass die Schrägflächen (14) ebene Flächen sind.

4. Fahrzeugluftreifen nach Anspruch 1 oder 2, **dadurch gekennzeichnet, dass** vorspringende Elemente (11", 12") vorgesehen sind, deren Schrägflächen (14") im Querschnitt konvex oder konkav gekrümmt sind.

5. Fahrzeugluftreifen nach einem der Ansprüche 1 bis 4, **dadurch gekennzeichnet, dass** Schrägflachen (14, 14', 14") vorgesehen sind, die an den Randkanten (1a, 1'a, 1"a, 1'"a) beginnen.

6. Fahrzeugluftreifen nach einem der Ansprüche 1 bis 4, **dadurch gekennzeichnet, dass** die Schrägflachen (14, 14', 14") vorgesehen sind, die in einem radialen Abstand von insbesondere 0,5 mm bis zu 3 mm von den Randkanten (1a, 1'a, 1"a, 1'''a) beginnen.

7. Fahrzeugluftreifen nach einem der Ansprüche 1 bis 6, **dadurch gekennzeichnet, dass** die Verbindungsabschnitte (13b) zumindest im Wesentlichen in axialer Richtung verlaufen.

8. Fahrzeugluftreifen nach einem der Ansprüche 1 bis 7, **dadurch gekennzeichnet, dass** die Verbindungsabschnitte (13'b, 13"b) gegenüber der axialen Richtung unter einem Winkel (γ₁, γ₂, δ) verlaufen, wobei sämtliche Verbindungsabschnitte (13'b, 13"b) entweder gleichsinnig oder abwechselnd gegensinnig zur axialen Richtung geneigt sind.

9. Fahrzeugluftreifen nach einem der Ansprüche 1 bis 8, **dadurch gekennzeichnet, dass** die gerundeten Eckabschnitte (13c) über 30° bis 150°, insbesondere 45° bis 135°, verlaufen.

10. Fahrzeugluftreifen nach einem der Ansprüche 1 bis 9, **dadurch gekennzeichnet, dass** die vorspringenden Elemente (11, 12, 11', 12', 11", 12") in bis zu fünf unterschiedlichen Umfangslängen (L₁ bis L₅, L₁' bis L₅', L₁" bis L₅") vorgesehen sind.

11. Fahrzeugluftreifen nach einem der Ansprüche 1 bis 10, **dadurch gekennzeichnet, dass** die größte Umfangslänge (L₅, L₅', L₅") um bis zu 65 % länger ist als die kleinste Umfangslänge (L₁, L₁', L₁").

12. Fahrzeugluftreifen nach einem der Ansprüche 1 bis 11, **dadurch gekennzeichnet, dass** die kleinste Umfangslänge (L₁) 6 mm bis 16 mm beträgt.

13. Fahrzeugluftreifen nach einem der Ansprüche 1 bis 11, **dadurch gekennzeichnet, dass** die kleinste Umfangslänge (L₁', L₁") 18 mm bis 30 mm beträgt.

14. Fahrzeugluftreifen nach einem der Ansprüche 1 bis 13, **dadurch gekennzeichnet, dass** die Anzahl und die Größe der unterschiedlichen Umfangslängen (L₁ bis L₅, L₁' bis L₅', L₁" bis L₅") der vorspringenden Elemente (11, 12, 11', 12', 11", 12") sowie deren Abfolge jenen bzw. jener der Pitchfolge der Profilpositive im Laufstreifen entspricht bzw. entsprechen.

## Claims

1. Pneumatic vehicle tyre for passenger vehicles or vans having at least one wide circumferential groove (1, 1', 1", 1"'), which runs in the circumferential direction, is bounded at the periphery of the tread by two bordering edges (1a, 1'a, 1"a, 1"'a), which run parallel to one another and in a straight line, and has a groove base (13, 13', 13") as well as two groove flanks (9, 10, 9', 10', 9", 10"), wherein elements (11, 12, 11' 12', 11", 12") which project at the groove flanks (9, 10, 9', 10', 9", 10") are formed alternately in the circumferential direction on one or the other of the groove flanks (9, 10, 9', 10', 9", 10"), wherein opposite each projecting element (11, 12, 11', 12', 11", 12") there is on the opposite groove flank (9, 10, 9', 10', 9", 10") a groove flank portion (9a, 10a, 9'a, 10'a, 9"a, 10"a), which runs at least essentially in the radial direction and, starting at the bordering edge (1a, 1'a, 1"a, 1'''a), as far as the groove base (13, 13', 13''), wherein the groove base (13, 13', 13") runs in a meandering or wave-shaped manner along and between the projecting elements (11, 12, 11', 12', 11", 12"), **characterized in that** the projecting elements (11, 12, 11', 12', 11", 12") are essentially of a wedge-like design and are respectively bounded in the radial direction by a single oblique face (14, 14', 14") which extends in the axial direction as far as the groove base (13, 13', 13")and runs in the circumferential direction at least essentially over the circumferential extent of the elements (11, 12, 11', 12', 11", 12"), wherein the projecting elements (11, 12; 11', 12', 11", 12") are provided in at least two different circumferential lengths (L₁ to L₅, L₁' to L₅'; L₁" to L₅") and follow one another over the circumference of the circumferential groove (1, 1', 1", 1"') according to a specific sequence, and wherein the groove base (13, 13', 13") is made up of groove base portions (13a, 13'a, 13"a), which run in a straight line in the circumferential direction and in the circumferential direction are alternately offset with respect to one another in the axial direction, connecting portions (13b, 13'b, 13"b) and rounded corner portions (13c, 13'c, 13"c) running between the groove base portions (13a, 13'a, 13"a) and the connecting portions (13b, 13'b, 13"b).

2. Pneumatic vehicle tyre according to Claim 1, **characterized in that** the oblique faces (14, 14', 14") run in relation to the radial direction at an angle (β) of 30° to 60°.

3. Pneumatic vehicle tyre according to Claim 1 or 2, **characterized in that** projecting elements (11, 12) of which the oblique faces (14) run in a straight line in cross section, so that the oblique faces (14) have planar faces, are provided.

4. Pneumatic vehicle tyre according to Claim 1 or 2, **characterized in that** projecting elements (11", 12") of which the oblique faces (14") are convexly or concavely curved in cross section are provided.

5. Pneumatic vehicle tyre according to one of Claims 1 to 4, **characterized in that** oblique faces (14, 14', 14") that begin at the bordering edges (1a, 1'a, 1"a, 1'''a) are provided.

6. Pneumatic vehicle tyre according to one of Claims 1 to 4, **characterized in that** the oblique faces (14, 14', 14") that begin a radial distance from the bordering edges (1a, 1'a, 1"a, 1'''a) of in particular 0.5 mm to 3 mm are provided.

7. Pneumatic vehicle tyre according to one of Claims 1 to 6, **characterized in that** the connecting portions (13b) run at least essentially in the axial direction.

8. Pneumatic vehicle tyre according to one of Claims 1 to 7, **characterized in that** the connecting portions (13'b, 13"b) run with respect to the axial direction at an angle (γ1, γ2, δ), wherein all of the connecting portions (13'b, 13"b) are inclined in relation to the axial direction either in the same sense or alternately in opposite senses.

9. Pneumatic vehicle tyre according to one of Claims 1 to 8, **characterized in that** the rounded corner portions (13c) run over 30° to 150°, in particular 45° to 135°.

10. Pneumatic vehicle tyre according to one of Claims 1 to 9, **characterized in that** the projecting elements (11, 12, 11', 12', 11", 12") are provided in up to five different circumferential lengths (L₁ to L₅, L₁' to L₅', L₁" to L₅") .

11. Pneumatic vehicle tyre according to one of Claims 1 to 10, **characterized in that** the greatest circumferential length (L₅, L₅', L₅") is longer than the smallest circumferential length (L₁, L₁', L₁") by up to 65%.

12. Pneumatic vehicle tyre according to one of Claims 1 to 11, **characterized in that** the smallest circumferential length (L₁) is 6 mm to 16 mm.

13. Pneumatic vehicle tyre according to one of Claims 1 to 11, **characterized in that** the smallest circumferential length (L₁', L₁") is 18 mm to 30 mm.

14. Pneumatic vehicle tyre according to one of Claims 1 to 13, **characterized in that** the number and size of the different circumferential lengths (L₁ to L₅, L₁' to L₅', L₁" to L₅") of the projecting elements (11, 12, 11', 12', 11", 12") and their sequence corresponds or correspond to that or those of the pitch sequence of the profile positives in the tread.

## Revendications

1. Pneumatique de véhicule pour véhicules de tourisme ou camionnettes, comprenant au moins une rainure périphérique large (1, 1', 1", 1''') s'étendant dans la direction périphérique, qui est limitée au niveau de la périphérie de la bande de roulement par deux arêtes de bord (1a, 1'a, 1"a, 1'''a) s'étendant parallèlement l'une à l'autre et en ligne droite, et qui présente un fond de rainure (13, 13', 13") ainsi que deux flancs de rainure (9, 10, 9', 10', 9", 10"), des éléments saillants (11, 12, 11', 12', 11", 12") étant réalisés au niveau des flancs de rainure (9, 10, 9', 10', 9", 10"), en alternance dans la direction périphérique au niveau de l'un et de l'autre flanc de rainure (9, 10, 9', 10', 9", 10"), une portion de flanc de rainure (9a, 10a, 9'a, 10'a, 9"a, 10"a) au niveau du flanc de rainure opposé (9, 10, 9', 10', 9", 10") étant opposée à chaque élément saillant (11, 12, 11', 12', 11", 12"), laquelle s'étend au moins essentiellement dans la direction radiale et en commençant au niveau de l'arête de bord (1a, 1'a, 1"a, 1'''a) jusqu'au fond de rainure (13, 13', 13"), le fond de rainure (13, 13', 13") s'étendant le long des, et entre les, éléments saillants (11, 12, 11', 12', 11", 12") en forme de méandres ou d'ondulations,
**caractérisé en ce que**
les éléments saillants (11, 12, 11', 12', 11", 12") sont réalisés essentiellement en forme de coins et sont limités dans la direction radiale à chaque fois par une surface oblique unique (14, 14', 14") qui s'étend dans la direction axiale jusqu'au fond de rainure (13, 13', 13") et qui s'étend dans la direction périphérique au moins essentiellement sur l'étendue périphérique des éléments (11, 12, 11', 12', 11", 12"), les éléments saillants (11, 12, 11', 12', 11", 12") étant prévus dans au moins deux longueurs périphériques différentes (L₁ à L₅, L₁' à L₅' ; L₁" à L₅") et se suivant sur la périphérie de la rainure périphérique (1, 1', 1", 1"') suivant une séquence déterminée, et le fond de rainure (13, 13', 13")se composant de portions de fond de rainure (13a, 13'a, 13"a), de portions de liaison (13b, 13'b, 13"b) et de portions de coins (13c, 13'c, 13"c) arrondies s'étendant entre les portions de fond de rainure (13a, 13'a, 13"a) et les portions de liaison (13b, 13'b, 13"b), s'étendant en ligne droite dans la direction périphérique, décalées les unes des autres en alternance dans la direction périphérique.

2. Pneumatique de véhicule selon la revendication 1, **caractérisé en ce que** les surfaces obliques (14, 14', 14") s'étendent suivant un angle (β) de 30° à 60° par rapport à la direction radiale.

3. Pneumatique de véhicule selon la revendication 1 ou 2, **caractérisé en ce que** des éléments saillants (11, 12) sont prévus, dont les surfaces obliques (14) s'étendent en ligne droite en section transversale de sorte que les surfaces obliques (14) sont des surfaces planes.

4. Pneumatique de véhicule selon la revendication 1 ou 2, **caractérisé en ce que** des éléments saillants (11", 12") sont prévus, dont les surfaces obliques (14") présentent une courbure convexe ou concave en section transversale.

5. Pneumatique de véhicule selon l'une quelconque des revendications 1 à 4, **caractérisé en ce que** des surfaces obliques (14, 14', 14") sont prévues, lesquelles commencent au niveau des arêtes de bord (1a, 1'a, 1"a, 1'''a).

6. Pneumatique de véhicule selon l'une quelconque des revendications 1 à 4, **caractérisé en ce que** les surfaces obliques (14, 14', 14") sont prévues, lesquelles commencent à une distance radiale de notamment 0,5 mm à 3 mm des arêtes de bord (1a, 1'a, 1"a, 1'''a).

7. Pneumatique de véhicule selon l'une quelconque des revendications 1 à 6, **caractérisé en ce que** les portions de liaison (13b) s'étendent au moins essentiellement dans la direction axiale.

8. Pneumatique de véhicule selon l'une quelconque des revendications 1 à 7, **caractérisé en ce que** les portions de liaison (13'b, 13"b) s'étendent suivant un angle (γ₁, γ₂, δ) par rapport à la direction axiale, toutes les portions de liaison (13'b, 13"b) étant inclinées soit dans le même sens soit en alternance en sens opposés par rapport à la direction axiale.

9. Pneumatique de véhicule selon l'une quelconque des revendications 1 à 8, **caractérisé en ce que** les portions de coins arrondies (13c) s'étendent sur 30° à 150°, en particulier sur 45° à 135°.

10. Pneumatique de véhicule selon l'une quelconque des revendications 1 à 9, **caractérisé en ce que** les éléments saillants (11, 12, 11', 12', 11", 12") sont prévus dans jusqu'à cinq longueurs périphériques différentes (L₁ à L₅, L₁' à L₅' ; L₁" à L₅") .

11. Pneumatique de véhicule selon l'une quelconque des revendications 1 à 10, **caractérisé en ce que** la plus grande longueur périphérique (L₅, L₅', L₅") est plus longue de jusqu'à 65 % que la plus petite longueur périphérique (L₁, L₁', L₁").

12. Pneumatique de véhicule selon l'une quelconque des revendications 1 à 11, **caractérisé en ce que** la plus petite longueur périphérique (L₁) est comprise entre 6 mm et 16 mm.

13. Pneumatique de véhicule selon l'une quelconque des revendications 1 à 11, **caractérisé en ce que** la plus petite longueur périphérique (L₁', L₁") est comprise entre 18 mm et 30 mm.

14. Pneumatique de véhicule selon l'une quelconque des revendications 1 à 13, **caractérisé en ce que** le nombre et la taille des différentes longueurs périphériques (L₁ à L₅, L₁' à L₅' ; L₁" à L₅" ) des éléments saillants (11, 12, 11', 12', 11", 12") ainsi que de leur séquence correspondent à ceux et/ou à la séquence de pas des parties profilées positives dans la bande de roulement.
